# EUROPÄISCHE PATENTSCHRIFT

(11) **EP 3 918 693 B1**
(45) Veröffentlichungstag und Bekanntmachung des Hinweises auf die Patenterteilung: **10.01.2024**
(21) Anmeldenummer: 20704414.0
(22) Anmeldetag: 28.01.2020
(51) Int. Cl.: H02K 1/14, H02K 1/18, F16B 5/02, H02K 7/18

(54) **FIXIERUNG VON STATORSEGMENTEN**
FIXATION OF STATOR SEGMENTS
FIXATION DES SEGMENTS DE STATOR

(30) Priorität: 29.01.2019 EP 19154227
(43) Veröffentlichungstag der Anmeldung: 08.12.2021
(73) Patentinhaber: Flender GmbH, 46395 Bocholt (DE)
(72) Erfinder: KOESZEGI, Attila, 24420 Kanjiza (RS); LINDMEIER, Andreas, 94099 Ruhstorf (DE); RATZISBERGER, Dominik, 94149 Kößlarn (DE); SCHOBER, Franz Xaver Michael, 94154 Neukirchen vorm Wald (DE); SCHWARZBAUER, Christoph, 94113 Tiefenbach (DE); YUE, Lei, Tianjin (CN)
(74) Vertreter: Michalski Hüttermann & Partner Patentanwälte mbB
(86) Internationale Anmeldenummer: PCT/EP2020/051972
(87) Internationale Veröffentlichungsnummer: WO 2020/157027

(56) Entgegenhaltungen:
- EP-A1- 3 352 334
- WO-A1-2018/113863
- US-A- 3 077 960
- US-A1- 2005 069 382
- US-B1- 10 125 800

## Beschreibung

Die Erfindung betrifft einen Stator einer direkt angetriebenen Windkraftanlage als auch ein Verfahren zur Montage und Positionierung von Statorsegmenten einer derartigen Windkraftanlage.

Statoren von direkt angetriebenen Windkraftgeneratoren sind aufgrund ihres Durchmessers größer 4 Meter aus in Umfangsrichtung betrachtet mehreren Statorsegmenten zusammengesetzt. Dies sind in der Regel sechs, acht oder zwölf Statorsegmente, die zu einem Ring zusammengebaut werden. In der Regel wird das Statorsegment an beiden axialen Enden fixiert. Aufgrund der Größe des Stators ist es schwierig, die geforderten Toleranzen einzuhalten. Bei der Herstellung der Statorsegmente und der Statorträger ist eine genaue Fertigung notwendig. Flexible Einstellungen in ihrer, insbesondere radialen Position zueinander, sind nicht möglich. Damit hängt der finale Außendurchmesser von exakten Fertigungen der Statorträger als auch der Statorsegmente ab. Dies fordert einen hohen Fertigungsaufwand, was sehr kostenintensiv ist.

Aus der WO 2018/113 863 A1 ist es bekannt, bei großen Windenergieanlagen mit Permanentmagneten den Luftspalt zwischen Rotor und Stator auf wenige Millimeter genau dadurch einzustellen, dass die großen Bauteile über zwei exzentrische Zwischenstücke und Schraubverbindungen miteinander verbunden werden.

Aus der US 2005/0069382 A1 ist eine Befestigung eines gleitenden Bauteil an einem stationären Bauteil mittels Langloch und einem einzigen exzentrischen Element bekannt, die in zwei Extremstellungen Formschluß und in allen anderen Stellungen nur Reibschluß bietet.

Aus der EP 3 352 334 A1 ist ein Stator eines direktangetriebenen Windkraftgenerators mit in Umfangsrichtung betrachtet angeordneten Statorsegmenten bekannt, die jeweils insbesondere an zwei parallel verlaufend angeordneten Flanschen eines gemeinsamen Statorträgers positioniert sind, wobei jedes Statorsegment über Fixationsvorrichtungen mit den Flanschen fixiert ist. Diese Vorrichtung bildet den Oberbegriff des Anspruchs 1. Zur exakten Ausrichtung der großen Bauteile oder zum exakten Ausgleich von nicht tolerierbaren Abweichungen gibt diese Literaturstelle keine Lehren.

Ausgehend davon liegt der Erfindung die Aufgabe zugrunde, einen Stator bereitzustellen, der die oben genannten Nachteile vermeidet und bei dem insbesondere der Luftspalt eines Windkraftgenerators einfach zu justieren ist.

Die Lösung der gestellten Aufgabe gelingt durch einen Stator mit den Merkmalen des Anspruchs 1. Ausführungen der Erfindung sind Gegenstände von Unteransprüchen.

Die Lösung der gestellten Aufgabe gelingt auch durch ein Verfahren zur Positionierung und Fixierung von Statorsegmenten mit den Schritten des Anspruchs 5.

Um nunmehr, insbesondere die radiale Positionierung eines Statorsegments flexibel bzw. einfach einstellbar gestalten zu können, ist erfindungsgemäß nun eine Flexibilisierung bzw. Einstellbarkeit der zueinander axial verbindenden Ausnehmungen von Statorsegment und Statorträger, insbesondere während des Montagevorganges möglich. Vorteilhafterweise wird dabei jedes Statorsegment an den parallelen Flanschen des Statorträgers fixiert, so dass pro Statorsegment drei oder vier Fixationspunkte vorgesehen sind, an denen eine Fixierung von Statorsegment mit Statorträger erfolgt.

Prinzipiell wird nunmehr die Position der Bohrung am Statorsegment parallel zur Winkelhalbierenden eines Statorsegments verschoben, um damit letztendlich das komplette Statorsegment radial zu verschieben. Dies gelingt insbesondere durch ein Zwischenstück, das formgenau zu einer dafür vorgesehenen Ausnehmung im Flanschträger des Statorsegments ist. Diese Zwischenstücke weisen eine außermittig angeordnete Bohrung auf. Die Ausnehmung im Flanschträger muss exakt gearbeitet sein, um das ebenfalls exakt bearbeitete Zwischenstück aufnehmen zu können, dass nunmehr genau die Position des Fixationspunktes des Statorträgers am und zum Statorsegment festlegt. Es ist also eine exakte Bearbeitung der Kontur der Ausnehmung am Statorsegment, als auch der dazu korrespondierenden Außenkontur des Zwischenstücks notwendig, die kongruent sind.

Dazu eignen sich Zwischenstücke mit rechteckförmiger, quadratischer, runder, rautenförmiger oder achteckiger Grundform

Das Zwischenstück und damit auch die Kontur der Ausnehmung im Statorsegment ist punktsymmetrisch bzgl. des Schwerpunkts, so dass eine Drehung des Zwischenstücks um den Schwerpunkt zu einer anderen Position der Bohrung auf dem Zwischenstück und damit der Bohrung am Statorträger herbeiführt.

Damit reduziert sich letztlich der gesamte Aufwand, um einen exakten und ggf. einfach einstellbaren Luftspalt zu erhalten.

Die Position der Bohrung auf dem Zwischenstück ist somit außermittig. Durch Drehen des Zwischenstücks um eine waagrecht verlaufende Symmetrieachse (bezogen auf die Außenkontur) des Zwischenstücks kann die Position des Statorsegments am Statorträger um den Versatz des Bohrungsmittelpunktes bezogen auf den Mittelpunkt des Zwischenstücks angehoben bzw. abgesenkt werden.

Des Weiteren sind nunmehr bei dem Montageprozess mehrere derartige an die Kontur der Ausnehmung angepasste Zwischenstücke mit unterschiedlich angeordneten Bohrungen vorhanden, aus denen gewählt wird, um eine exakte Positionierung des Statorsegments am Statorträger vornehmen zu können.

Die Erfindung sowie weitere vorteilhafte Ausgestaltungen der Erfindung werden anhand prinzipiell dargestellter Ausführungsbeispielen näher erläutert. Darin zeigen:
- FIG 1: eine prinzipielle Windkraftanlage,
- FIG 2: einen Ausschnitt eines Statorsegments an einem Statorträger,
- FIG 3: ein Statorsegment,
- FIG 4: eine prinzipiell dargestellte Herstellungsweise eines Stators,
- FIG 5: ein weiteres Statorsegment mit Flansch,
- FIG 6: einen Fixationspunkt,
- FIG 7: einen Längsschnitt des Fixationspunkt,
- FIG 8: ein rechteckförmiges Zwischenstück,
- FIG 9: ein quadratisches Zwischenstück
- FIG 10: ein weiteres rechteckförmiges Zwischenstück,
- FIG 11: ein rautenförmiges Zwischenstück,
- FIG 12: ein trapezförmiges Zwischenstück,
- FIG 13: ein dreieckförmiges Zwischenstück,
- FIG 14: ein achteckiges Zwischenstück,
- FIG 15: ein rundes Zwischenstück.

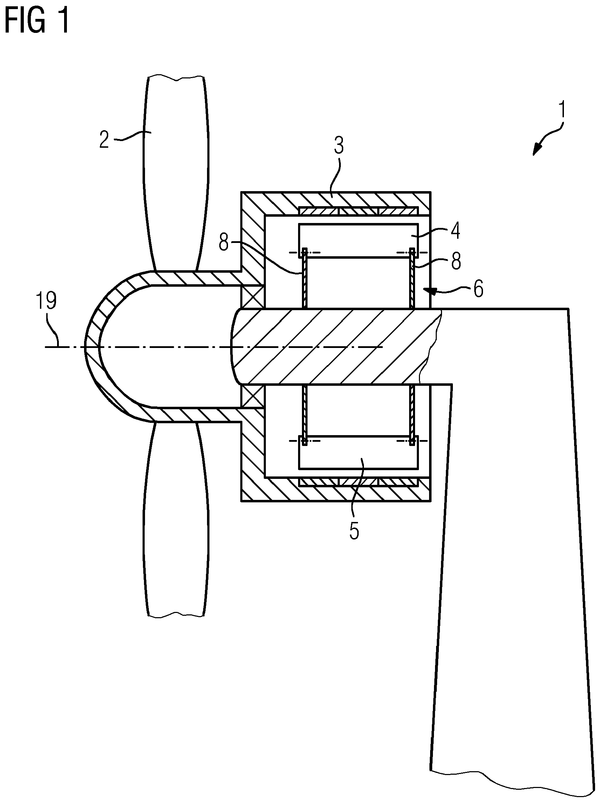

FIG 1 zeigt eine prinzipielle Darstellung eines direkt angetriebenen Windkraftgenerators mit einem Außenläufer. Der Rotor 3 weist dabei nicht näher dargestellte Permanentmagnete auf, die mit einem in dieser Darstellung nicht näher dargestellten Wicklungssystem eines Stators 4 elektromagnetisch wechselwirken und somit aufgrund der Rotation der Windturbine der Windkraftanlage 1 elektrische Energie bereitstellen. Der Stator 4 ist in Umfangsrichtung betrachtet in Statorsegmente 5 aufgeteilt, die sich jeweils an Flanschen 8 eines Statorträgers 6 abstützen, der in dieser Ausführung zwei parallel verlaufende Flansche 8 aufweist.

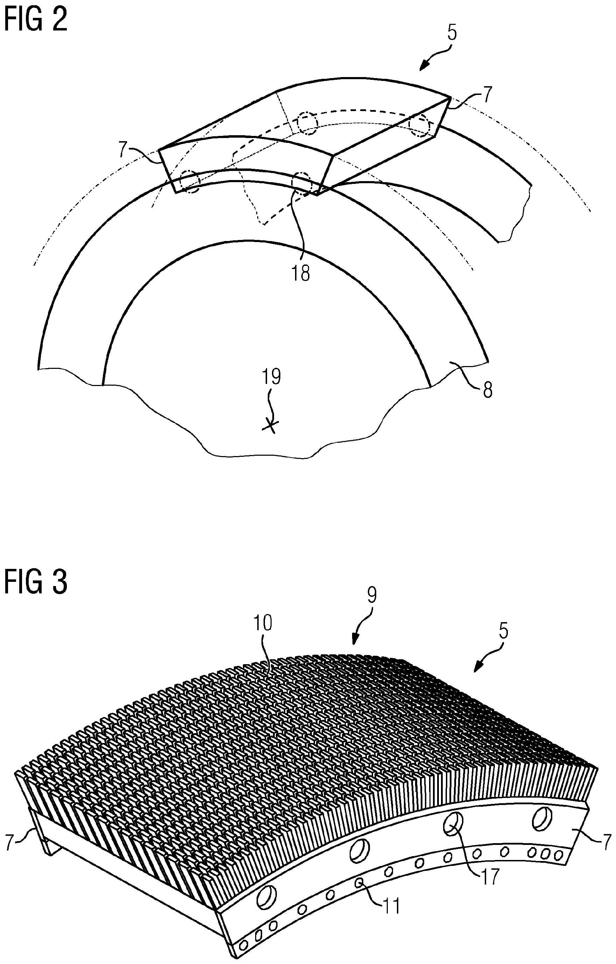

Wie FIG 2 näher darstellt, ist ein Statorsegment 5 mit in dieser Darstellung vier Fixationspunkten 18 durch eine geeignete Fixiervorrichtung, wie sie noch näher beschrieben wird, an den Flanschen 8 des Statorträgers 6 befestigt.

Ein Statorsegment 5 weist ein Blechpaket 9 auf, das achsparallel verlaufende Nuten 10 aufweist, in denen ein nicht näher dargestelltes Wicklungssystem angeordnet und fixiert ist. Dieses Blechpaket 9 wird durch Segmentträger 7 axial begrenzt und zusammengehalten. Über die Segmentträger 7, die an ihrem radial inneren Bereich Ausnehmungen 11 aufweisen, wird nunmehr ein Statorsegment 5 am Statorträger 6 bzw. den Flanschen 8 befestigt.

FIG 3 zeigt in einer perspektivischen Darstellung ein Statorsegment 5 ohne Wicklungssystem mit Segmentträgern 7, die mit mehreren Ausnehmungen 11 versehen sind. Die Segmentträger 7 paketieren und fixieren das Blechpaket 9 des Statorsegments 5. Weitere größeren Ausnehmungen bzw. Durchbrüche 17 im Segmentträger 7 gestatten im Betrieb der Windkraftanlage 1 den Durchtritt von Kühlluft, um den Stator 4 zu kühlen.

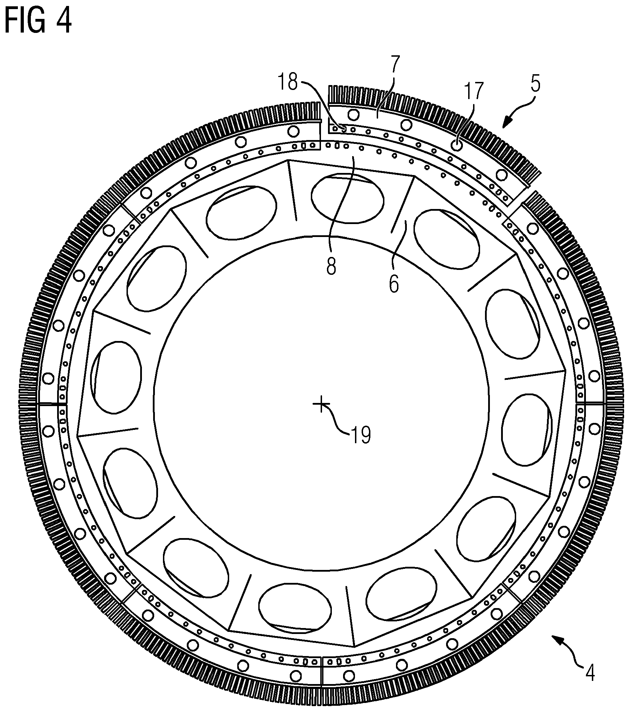

FIG 4 zeigt prinzipiell, wie die Statorsegmente 5 an einem Statorträger 6 mittels Verbindungen von Flansch des Statorträgers 6 und Flansch 8 des Statorsegments 5 zueinander fixiert und ausgerichtet werden. Aus Gründen der zeichnerischen Übersichtlichkeit wurde auf das Wicklungssystem in den Nuten verzichtet. Die Statorsegmente 5 werden vorzugsweise radial auf den Statorträger 6 gesetzt, anschließend ausgerichtet und über die Fixationspunkte 18 mittels Fixationsvorrichtungen fixiert.

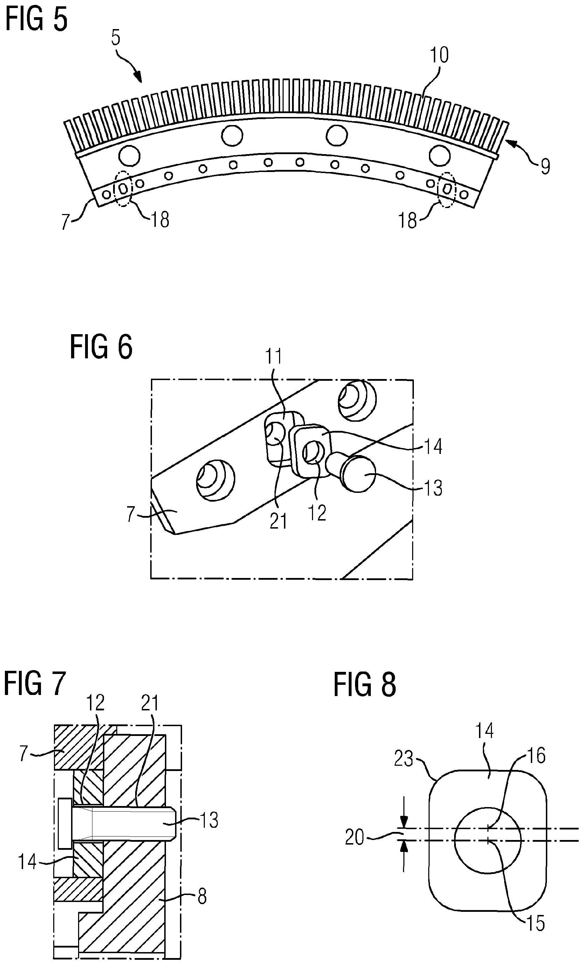

FIG 5 zeigt in einer Seitendarstellung eine genauere Ansicht eines Statorsegments 5, das ein Blechpaket 9 zeigt, mit noch nicht durch das Wicklungssystem belegten Nuten 10. Des Weiteren zeigt FIG 5 die radial nach innen weisenden Abschnitte des Segmentträgers 7, über die das Statorsegment 5 am Statorträger 6 an den vorgegebenen Fixationspunkten 18 fixiert wird.

FIG 6 zeigt in einer Detaildarstellung einen Fixationspunkt 18, wobei die Fixiervorrichtung mehrere Teile aufweist. Zum einen die Ausnehmung 11 des Segmentträgers 7, die bzgl. der Kontur mit engsten Toleranzen hergestellt wurde und in die ein passgenaues Zwischenstück 14 einsetzbar ist, das ebenso exakt auf Form gearbeitet sein muss. Das Zwischenstück 14 weist einen außermittig angeordneten Mittelpunkt einer Bohrung auf, so dass durch Drehen dieses Zwischenstücks 14 in einer Ebene parallel zu den Flanschen 8 ermöglicht wird, das Statorsegment 5 in der Ebene des Flansches 8 zu verschieben. Das Zwischenstück 14, wie in FIG 8 näher dargestellt, weist eine Bohrung 23 auf, deren Mittelpunkt 15 bzgl. der Mitte 16 des Zwischenstücks 14 einen Versatz 20 aufweist.

Mittels einer Montagehilfsvorrichtung der Statorsegmente 5 wird dabei das Statorsegment 5 angehoben oder abgesenkt und das Zwischenstück 14 mittels des Passstiftes 13 positionsgenau fixiert. Durch Drehung des Zwischenstücks 14 um 180° um die Mitte 16 kann der Segmentträger 7 an einem Fixationspunkt 18 radial versetzt positioniert werden.

Durch Auswahl aus mehreren konturmäßig gleichen Zwischenstücken 14 mit unterschiedlichem Versatz 20 an einem Fixationspunkt kann der Segmentträger 7 radial genau positioniert werden und damit der Luftspalt eines Windkraftgenerators exakt eingestellt werden. Ebenso wird an den anderen Fixationspunkten 18 dieses Segmenträgers 7 verfahren.

Gemäß den obigen Schritten wird nunmehr bei den anderen Fixationspunkten 18 der weiteren Statorsegmente 5 verfahren. Dabei wird, z.B. wie in FIG 7 dargestellt, das Zwischenstück 14 durch eine nicht näher dargestellte Montagevorrichtung derartig ausgerichtet, dass eine axiale Flucht der Bohrung 12 des Zwischenstücks 14 und der Öffnung 21 im Flansch 8 des Statorträgers 6 erfolgt. Ein Passstift 13 weist ein leichtes Übermaß gegenüber der Bohrung 12 des Zwischenstücks 14 und der Öffnung 21 des Flansches 8 auf, so dass eine exakte Positionierung und Ausrichtung mittels der Montagevorrichtung und damit ein exakter Luftspalt eingestellt und mittels der Fixiervorrichtung positionsgenau fixiert werden kann.

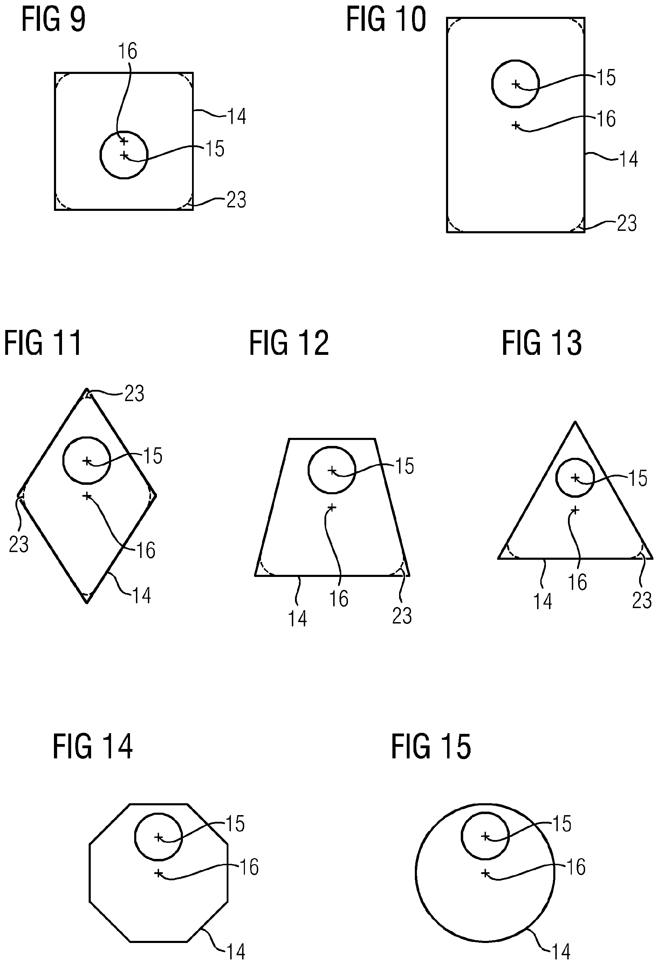

FIG 9 bis FIG 15 zeigen weitere Zwischenstücke 14, die mit ihrer jeweiligen Kontur im Segmentträger 7 im Wesentlichen korrespondieren müssen, um den Segmenträger 7 und damit das Statorsegment exakt zu positionieren. Durch jeweiliges Drehen der Zwischenstücke 14 um 180° um die Mitte 16 ist bei den jeweiligen Zwischenstücken 14 bereits eine Varianz bei der Montage möglich. Rundungen 23 der Eckpunkte der jeweiligen Zwischenstücke 14 beeinträchtigen dabei die Positionierung nicht.

Der Versatz 20 zwischen Mittelpunkt 15 und der Mitte 16 des Zwischenstücks 14 ist in den Figuren 9 bis 15 teilweise übertrieben dargestellt. Der Versatz 20, wie auch in FIG 8 dargestellt, bewegt sich im Bereich von 0,1mm bis einige Millimeter.

Der erfinderische Gedanke lässt sich auch bei einem Statorträger 6 mit nur einem Flansch umsetzen. Dabei weist dann das Statorsegment 5 nur einen im Wesentlichen, bezogen auf das Statorsegment 5, mittig angeordneten Segmentträger auf.

## Patentansprüche

1. Stator (4) für einen direktangetriebenen Windkraftgenerator mit in Umfangsrichtung betrachtet angeordneten Statorsegmenten (5) und einem Statorträger, der zumindest zwei parallel verlaufend angeordnete Flanschen aufweist, an den die Statorsegmente positioniert sind, wobei Öffnungen (21) in den Flanschen vorgesehen sind, wobei jedes Statorsegment (5) über Fixationsvorrichtungen mit den Flanschen (8) fixiert ist, **dadurch gekennzeichnet, dass** die Fixationsvorrichtungen je eine Ausnehmung (11) an einem Segmentträger (7) des Statorsegments(5) enthalten, dass in den Ausnehmungen (11) je nur ein Zwischenstück (14) von mehreren an die Kontur der Ausnehmungen (11) angepassten Zwischenstücken (14) mit unterschiedlich angeordneten Bohrungen (12) eingesetzt ist, und dass je ein Passstift (13) vorgesehen ist, der in die Bohrung (12) des Zwischenstücks (14) und in eine der Öffnungen (21) des Flansches (8) eingesetzt ist, um den Luftspalt des Windkraftgenerators einzustellen.

2. Stator (4) nach Anspruch 1, **dadurch gekenn**- **zeichnet**, dass die Fixationsvorrichtung an den äu-ßeren Bereich des Statorsegments (5) vorgesehen ist.

3. Stator (4) nach Anspruch 1 oder 2, **dadurch ge- kennzeichnet,** dass die Fixationsvorrichtungen achsparallele Passstifte (13) aufweisen.

4. Stator (4) nach einem der vorhergehenden Ansprüche,
**dadurch gekennzeichnet, dass** die Passstifte (13) bezüglich einer im Flansch (8) des Statorträgers (6) vorhandenen Öffnung (21) ein Übermaß aufweisen.

5. Verfahren zur Positionierung und Fixierung von Statorsegmenten (5) eines Stators (4) eines direkt angetriebenen Windkraftgenerators mittels mehrerer Fixationspunkte (18) zur Erzielung eines gleichmäßigen Luftspalts zwischen dem Stator (4) und einem Rotor (6) durch folgende Schritte:
- Ansetzen eines Statorsegments (5) an einen Statorträger (6) mittels Montagevorrichtung,
- Justieren des Statorsegments (5) am Statorträger (6) und Einsetzen eines einzigen geeigneten Zwischenstücks (14) in eine Ausnehmung (11) des Segmentträgers (7) des Statorsegments (5), wobei Zwischenstück (14) und Ausnehmung (11) passgenau ausgeführt sind und wobei das Zwischenstück (14) aus einer Auswahl von mehreren an die Kontur der Ausnehmungen (11) angepassten Zwischenstücken (14) mit unterschiedlich angeordneten Bohrungen (12) ausgewählt wird,
- Einsetzen eines Passstiftes (13) in die Bohrung (12) des Zwischenstücks (14) und einer Öffnung (21) im Flansch (8) des Statorträgers (6), so dass durch Einsetzen des Passstiftes (13) in die axial fluchtende Bohrungen (12) des Zwischenstücks (14) und der Öffnung (21) im Flansch (8) eine radiale Positionierung und Fixierung des Statorelements (5) am Flansch (8) des Statorträgers (6) erfolgt,
- wiederholen dieser Schritte an weiteren Fixationspunkten (18) des Statorsegments (5) und weiterer Statorsegmente (5) bis die erforderliche Position eingenommen, fixiert und der Luftspalt des Windkraftgenerators eingestellt ist.

## Claims

1. Stator (4) for a directly driven wind turbine generator, comprising stator segments (5), which are arranged in the circumferential direction, and a stator support that comprises at least two flanges which are arranged so as to run in parallel and on which the stator segments are positioned, wherein openings (21) are provided in the flanges (8), wherein each stator segment (5) is secured to the flanges (8) by securing devices,
**characterized in that**
the securing devices each contain a cavity (11) on a segment support (7) of the stator segment (5); **in that** only one intermediate piece (14) of a plurality of intermediate pieces (14), which are adapted to the contour of the cavities (11) and have differently arranged holes (12), is inserted in each of the cavities (11); and
**in that** an alignment pin (13), which is inserted in the hole (12) of the intermediate piece (14) and in one of the openings (21) of the flange (8), is in each case provided in order to adjust the air gap of the wind turbine generator.

2. Stator (4) according to Claim 1, **characterized in that** the securing device is provided on the outer region of the stator segment (5).

3. Stator (4) according to Claim 1 or 2, **characterized in that** the securing devices have axially parallel alignment pins (13).

4. Stator (4) according to one of the preceding claims, **characterized in that** the alignment pins (13) have an oversize with respect to an opening (21) present in the flange (8) of the stator support (6).

5. Method for positioning and securing stator segments (5) of a stator (4) of a directly driven wind turbine generator by means of multiple securing points (18) in order to achieve a uniform air gap between the stator (4) and a rotor (6) by means of the following steps:
- placing a stator segment (5) on a stator support (6) by means of a mounting device;
- adjusting the stator segment (5) on the stator support (6) and inserting a single suitable intermediate piece (14) into a cavity (11) of the segment support (7) of the stator segment (5), wherein the intermediate piece (14) and cavity (11) are designed for an accurate fit, and wherein the intermediate piece (14) is selected from a selection of a plurality of intermediate pieces (14) which are adapted to the contour of the cavities (11) and have differently arranged holes (12);
- inserting an alignment pin (13) into the hole (12) in the intermediate piece (14) and an opening (21) in the flange (8) of the stator support (6) so that, by inserting the alignment pin (13) into the axially aligning holes (12) in the intermediate piece (14) and the opening (21) in the flange (8), a radial positioning and securing of the stator element (5) to the flange (8) of the stator support (6) is carried out;
- repeating these steps at further securing points (18) of the stator segment (5) and further stator segments (5) until the required position has been assumed and secured and the air gap of the wind turbine generator has been adjusted.

## Revendications

1. Stator (4) destiné à un générateur d'éolienne à entraînement direct qui comprend des segments de stator (5) disposés dans la direction circonférentielle et un support de stator qui comporte au moins deux flasques qui sont disposés de manière à s'étendre en parallèle et sur lesquels sont positionnés les segments de stator,
des ouvertures (21) étant prévues dans les flasques (8), chaque segment de stator (5) étant fixé aux flasques (8) par le biais de dispositifs de fixation, **caractérisé en ce que** les dispositifs de fixation comportent chacun un évidement (11) sur un support de segment (7) du segment de stator (5), **en ce qu'**une seule pièce intermédiaire (14) parmi plusieurs pièces intermédiaires (14), adaptées au contour des évidements (11) pourvues d'alésages (12) disposés de différentes manières, est insérée dans chacun des évidements (11), et **en ce qu'**un goujon de montage (13) est prévu qui est inséré dans l'alésage (12) de la pièce intermédiaire (14) et dans une des ouvertures (21) du flasque (8) afin de régler l'entrefer du générateur d'éolienne.

2. Stator (4) selon la revendication 1, **caractérisé en ce que** le dispositif de fixation est prévu sur la zone extérieure du segment de stator (5).

3. Stator (4) selon la revendication 1 ou 2, **caractérisé en ce que** les dispositifs de fixation comportent des goujons de montage (13) parallèles à l'axe.

4. Stator (4) selon l'une des revendications précédentes, **caractérisé en ce que** les goujons (13) présentent un surdimensionnement par rapport à une ouverture (21) ménagée dans le flasque (8) du support de stator (6).

5. Procédé de positionnement et de fixation de segments de stator (5) d'un stator (4) d'un générateur d'éolienne à entraînement direct au moyen de plusieurs points de fixation (18) afin d'obtenir un entrefer uniforme entre le stator (4) et un rotor (6), ledit procédé comprenant les étapes suivantes :
- placer un segment de stator (5) sur un support de stator (6) à l'aide d'un dispositif de montage,
- ajuster le segment de stator (5) sur le support de stator (6) et insérer une seule pièce intermédiaire adaptée (14) dans un évidement (11) du support de segment (7) du segment de stator (5), la pièce intermédiaire (14) et l'évidement (11) étant conçus pour s'emboîter avec précision et la pièce intermédiaire (14) étant sélectionnée parmi un choix de plusieurs pièces intermédiaires (14) adaptées au contour des évidements (11) et pourvues d'alésages (12) disposés de différentes manières,
- insérer un goujon de montage (13) dans l'alésage (12) de la pièce intermédiaire (14) et dans une ouverture (21) ménagée dans le flasque (8) du support de stator (6), de manière à ce que l'insertion du goujon de montage (13) dans les alésages (12), alignés axialement, de la pièce intermédiaire (14) et dans l'ouverture (21) ménagée dans le flasque (8) permette un positionnement radial et une fixation de l' élément de stator (5) sur le flasque (8) du support de stator (6),
- répéter ces étapes sur d'autres points de fixation (18) du segment de stator (5) et d'autres segments de stator (5) jusqu'à ce que la position requise soit prise et fixée et jusqu'à ce que l'entrefer du générateur d'éolienne soit réglé.
